# EUROPÄISCHE PATENTSCHRIFT

(11) **EP 1 158 237 B1**
(45) Veröffentlichungstag und Bekanntmachung des Hinweises auf die Patenterteilung: **01.03.2006**
(21) Anmeldenummer: 01810414.1
(22) Anmeldetag: 26.04.2001
(51) Int. Cl.: F16L 37/40, F16L 37/084

(54) **Steckkupplung für Druckluftleitungen**
Push-in connector for compressed air lines
Accouplement à emmanchement pour conduits d'air comprimé

(30) Priorität: 22.05.2000 CH 10222000
(43) Veröffentlichungstag der Anmeldung: 28.11.2001
(73) Patentinhaber: ENSMENGER, Helmut, CH-8840 Einsiedeln (CH)
(72) Erfinder: ENSMENGER, Helmut, CH-8840 Einsiedeln (CH)
(74) Vertreter: Schneider Feldmann AG Patent- und Markenanwälte

(56) Entgegenhaltungen:
- CH-A- 681 249
- DE-A- 2 443 249

## Beschreibung

Die vorliegende Erfindung betrifft eine Steckkupplung mit einem eine Ringnut aufweisenden Stecker und einer Kupplungsdose für eine Druckluftleitung, welche eine Einstecköffnung für den Stecker, eine Verriegelungseinrichtung mit Riegeln zum Eingreifen in die Ringnut des Steckers und ein sich durch Einstecken des Steckers öffnendes, selbstschliessendes Ventil aufweist, welches unter Federbelastung in einer Steckdosenhülse axial beweglich gehalten ist, und wobei die Verriegelungsvorrichtung einen axial verschiebbaren und drehbaren Schaltring aufweist, der die radial beweglich gehaltenen Riegel sperrt oder freigibt, wobei die Kupplungsdose aus einer Kupplungsdosenhülse mit Druckleitungsanschluss und einer aufschraubbaren Kupplungsdosenkappe mit Einstecköffnung besteht.

Eine Steckkupplung der eingangs genannten Art ist beispielsweise aus der DE-B-24 43 249 bekannt. Die Verriegelungsvorrichtung dieser Ausführung besteht dabei aus einem Schaltrohr, in dem mehrere Riegel lagern, und einem Schaltring, der auf beiden Stirnflächen mit je einem Zahnkranz ausgerüstet ist. Auf den oberen Zahnkranz des Schaltringes wirken mehrere Zähne, die an einem Flansch am Schaltring angeordnet sind, während der untere Zahnkranz am Schaltring mit einer Scheibe mit mehreren Zähnen zusammenwirkt. Das Ganze ist in einem Gehäuse gelagert und axial gegen die Kraft einer Druckfeder verschiebbar mittels des einzuschiebenden und in das Schaltrohr eindringenden Steckers betätigbar.

Beim Einschieben muss natürlich der Stecker mit der Aufnahmeöffnung in der Kupplungsdose, d.h. mit der Oeffnung im Schaltrohr fluchtend übereinstimmen. Traf dies nicht zu, so wurde das Schaltrohr durch den verkantenden Stecker axial bewegt und der Schaltring führte einen Schaltschritt durch, so dass die Riegel in die Sperrlage gerieten. Nun war die Kupplungsdose verriegelt und der Stecker liess sich nicht mehr einschieben. Zur Entriegelung muss die ungewollte Fehlschaltung nun gewollt wiederholt werden, um den Schaltring um eine Teilung weiterzudrehen und damit die Riegel wieder freizugeben.

Dieses Problem wurde vom Erfinder dieser Anmeldung gelöst mit einer Weiterentwicklung gemäss der CH-681248-A, bei der das Schaltrohr mit Höhlen versehen wurde, in denen Schaltkugel lagern. Diese Schaltkugeln ragen durch Fenster in die Einstecköffnung für den Stecker hinein, so dass diese Kugeln beim Einstecken des Steckers in die Kupplungsdose radial nach aussen geschoben wurden. Diese Lösung hat sich ausserordentlich bewährt, doch war der Einsatzbereich dieser Steckkupplung insofern eingeschränkt, weil das sich durch das realisierte Konzept ergebende relativ grosse Gehäuse der Kupplungsdose die Verwendung von Steckern mit kurzem Dichtungshals nicht zuliess. Auch ergab sich durch eindringende Verschmutzungen, insbesondere durch Oelreste, die über die Pressluft in die Steckkupplung gelangten, dass diese in den sensitiven Bereich der Schaltkugeln gelangten. Dieses Oel oder Fett verharzte nach einer Zeit und führte zu Beeinträchtigungen der Beweglichkeit der Kugeln und Schaltelemente.

Es ist daher die Aufgabe der vorliegenden Erfindung, eine Steckkupplung der eingangs genannten Art derart zu modifizieren, dass eine kleinere Kupplungsdose realisiert werden kann, die Stecker von möglichst unterschiedlichen Längen aufzunehmen vermag. Prinzipiell ist jedoch auch eine mögliche Vereinfachung des Aufbaus Ziel der neuen Steckkupplung.

Diese Aufgabe löst eine Steckkupplung mit den Merkmalen des Patentanspruches 1.

Dank des Konzeptes einer Steckkupplungsdose mit einem mittig fest angeordneten Stützring, welcher den Innenraum der Kupplungsdose in einen Dicht- und Ventilbereich sowie andererseits in einen Verriegelungsbereich unterteilt, der nur von einem zylindrischen Schaltkern durchsetzt wird, ist es sowohl herstellungstechnisch als auch montagetechnisch erheblich einfacher als das bisherige Konzept und erhöht auch den freien Durchlass für die Druckluft. Weitere vorteilhafte Ausgestaltungsformen des Erfindungsgegenstandes gehen aus den abhängigen Ansprüchen hervor und deren Bedeutung ist in der nachfolgenden Beschreibung unter Hinweis auf die Figuren erläutert.

Eine bevorzugte Ausführungsform ist in der Zeichnung im Detail dargestellt. Es zeigt:
- Figur 1: zeigt einen Axialschnitt durch die zusammengebaute Kupplung;
- Figur 2: zeigt einen Axialschnitt durch den separat dargestellten Schaltkern und
- Figur 3: eine Aufsicht auf den Schaltkern in axialer Richtung.
- Figur 4: zeigt das Schaltgehäuse ohne die darin einzulegenden Riegel in einer Seitenansicht und
- Figur 5: in Ansicht von oben, während
- Figur 6: das Schaltgehäuse von unten zeigt.
- Figur 7: zeigt den Schaltring in Seitenansicht und
- Figur 8: in der Ansicht von oben. Schli.esslich ist in der
- Figur 9: der Schaltkranz in Seitenansicht und in
- Figur 10: in der Aufsicht dargestellt.

Die Kupplungsdose beziehungsweise die Steckkupplung insgesamt ist mit 1 bezeichnet. Die Kupplungsdose 1 bildet das Gehäuse der Steckkupplung. Dieses Gehäuse besteht aus der Kupplungsdosenhülse 10 und der damit verschraubten Kupplungsdosenkappe 11. Die Kupplungsdosenkappe 11 hat eine stirnseitige Einstecköffnung 2, die von einem Kragen 13 begrenzt wird. Die Kupplungsdosenhülse 10 hat einen Druckleitungsanschluss 12. Der Innenraum der Kupplungsdose wird durch einen Stützring 30, welcher zwischen der Kupplungsdosenhülse 10 und der Kupplungsdosenkappe 11 gehalten ist, in zwei Bereiche getrennt. Links vom Stützring 30 ist der Ventil- und Dichtungsraum 14, während rechts vom Stützring 30 der Verriegelungs- oder Steckeraufnahmeraum 15 gebildet ist. Der Ventil- und Dichtraum 14 liegt praktisch vollständig in der Kupplungsdosenhülse 10, während der Steckeraufnahmeraum 15 vollständig in der Kupplungsdosenkappe 11 liegt.

Die Kupplungsdosenhülse 10 ist direkt anschliessend am Druckleitungsanschluss 12 zum Ventil- und Dichtraum 14 erweitert, so dass sich eine Schulter bildet, auf die eine Ventilfeder 23 aufliegt. Die Ventilfeder 23 ist konisch geformt. Während das weite Ende auf der erwähnten Schulter aufliegt, hält das verjüngte Ende das Ventil 20, das aus einem Ventilkörper 21 und einem Ventilhalter 22 gebildet ist.

Der Ventilhalter 22 ist als flaches Metallstanzteil realisiert, das in dem vorzugsweise aus Kunststoff gefertigten Ventilkörper 21 gehalten ist. Dies ist im vorliegenden Fall durch einen gezahnten flachen Zapfenteil realisiert, der dank der Elastizität des Ventilkörpers einsteckbar ist. Selbstverständlich kann der Ventilhalter 22 auch in den Ventilkörper direkt teilweise eingegossen oder eingespritzt werden, je nach dem gewählten Herstellungsverfahren.

Diese Ausgestaltung eines Ventils 20 ist im Bereich der Steckkupplung nicht bekannt. Da praktisch der Luftstrom einen grossen Durchlass erhält und die Strömung wenig Turbulenz bildet, konnte bei gleichem Steckerdurchmesser das Strömungsvolumen um rund 90% gegenüber der vorbekannten Lösung erhöht werden.

Der erwähnte Stützring 30 wird von einem Schaltkern 40 durchsetzt und bildet eine zylindrische Gleitlagerfläche für den Ventilhalter 22. Das in den Ventil- und Dichtraum 14 hineinragende Ende des Schaltkernes 40 ist leicht angephast und bildet den Ventilsitz für den Ventilkörper 21 des Ventiles 20. Zwischen dem Stützring 30 und der Kupplungsdosenhülse 10 ist eine Dichtmanschette 70 form- und kraftschlüssig gehalten. Die Dichtmanschette 70 dichtet die Kupplungsdosenhülse 10 zum Schaltkern 40.

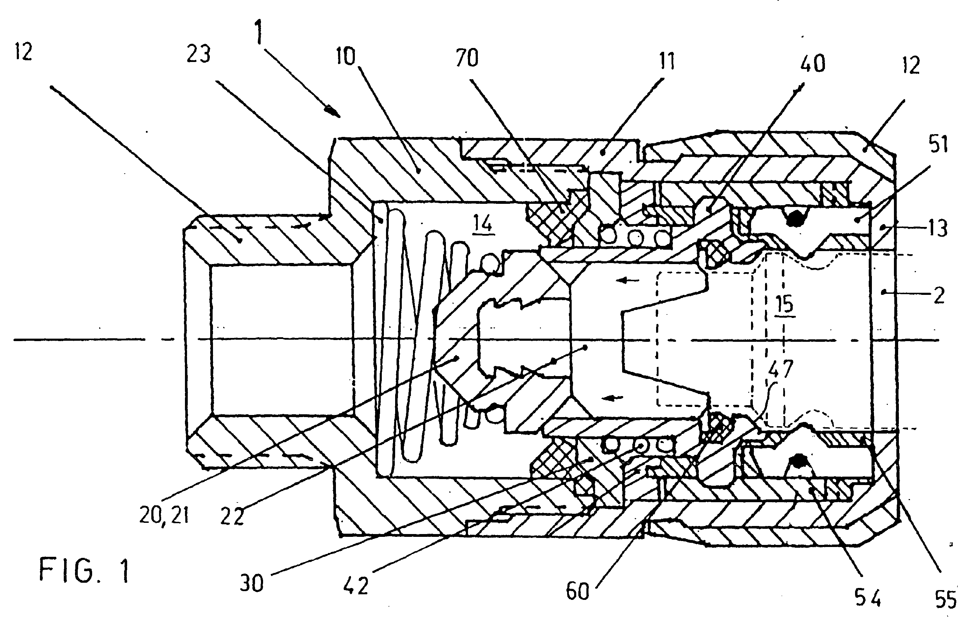

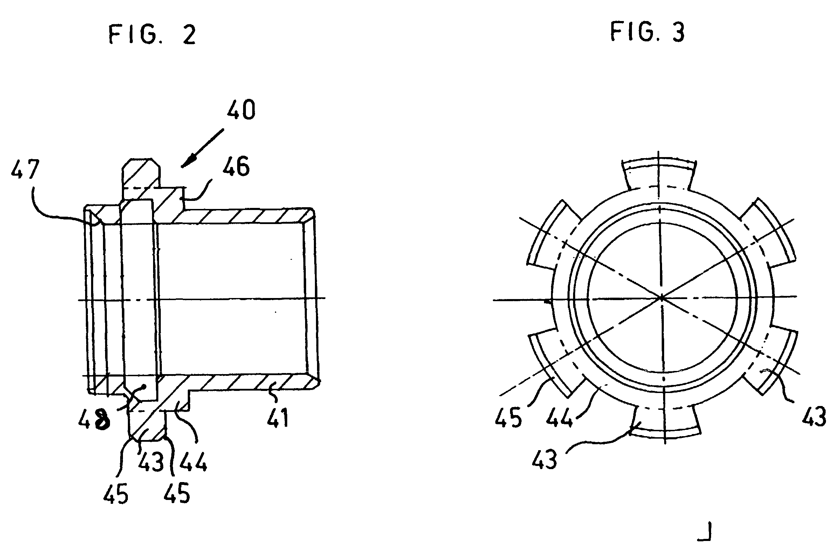

Die genauere Ausgestaltung des Schaltkernes 40 ist in den Figuren 2 und 3 ersichtlich. Dieser Schaltkern 40 besteht aus dem zylindrischen Führungsbereich 41, in dem wie bereits erwähnt der Ventilhalter 22 axial verschiebbar gelagert ist. In die zylindrische Innenfläche ist in einem verdickten Bereich eine Innenringnut 48 eingelassen, die zur Aufnahme einer Dichtmanschette 60 dient. Diese Dichtmanschette 60, die in der Figur 1 erkennbar ist, dichtet den Schaltkern 40 zum eingeführten Stecker, der in der Figur andeutungsweise strichliniert eingezeichnet ist. Der Schaltkern 40 hat in seinem verdickten Bereich 44 sechs radial nach aussen vorstehende Mitnehmernocken 43, die bei 45 angephast sind. Der verdickte Bereich 44 bildet zudem eine Schulter 46. Zwischen dieser Schulter 46 und einer Einkerbung im Stützring 30 ist eine zylindrische Druckfeder 42 angeordnet, welche die Schaltbewegung unterstützt.

Die Mitnehmernocken 43 ragen durch ein Schaltgehäuse 55 in einen Schaltring 54 hinein.

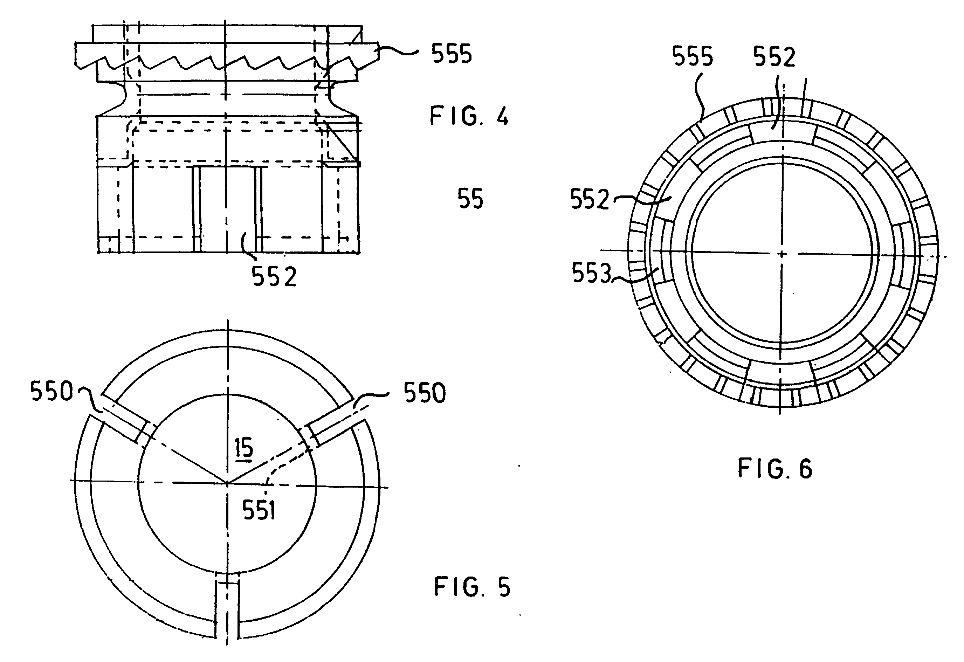

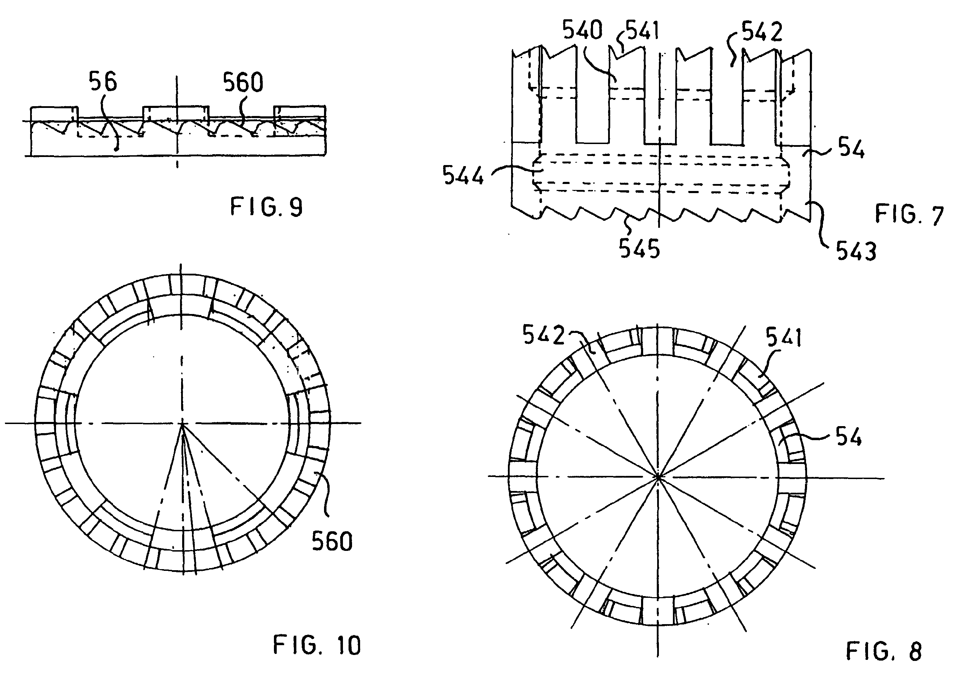

Das relativ komplexe Schaltgehäuse 55 ist in den Figuren 4 bis 6 näher dargestellt. Das Schaltgehäuse 55 dient vorerst der Halterung von hier drei Riegeln 51, wozu das Schaltgehäuse 55 drei gleichmässig über den Umfang verteilte Lagernuten 550 aufweist. Durch Fensterdurchbrüche 551 können die Riegel 51 mit ihren vorstehenden Nasen in den Steckerraum 15 hineinragen. An dem Ende des Schaltgehäuses 55, das im eingebauten Zustand zum Stützring 30 hin gerichtet ist, sind Ausnehmungen 552 axial verlaufend eingefräst, die so gestaltet sind, dass die Mitnehmernocken 43 des Schaltkernes 40 darin Aufnahme finden können. Die verbleibenden Wandabschnitte 553 sind endständig verdünnt und passen formschlüssig in entsprechende Ausnehmungen 560 des Schaltkranzes 56 hinein, der wiederum einzeln und im grösseren Massstab in den Figuren 9 und 10 dargestellt ist.

Das Schaltgehäuse 55 weist einen Zahnkranz 555 auf, der mit vierundzwanzig Zähnen versehen ist. Dieser Schaltkranz 555 wirkt zusammen mit einem Schaltring 54. Dieser, in den Figuren 7 und 8 detailliert dargestellte Schaltring 54 weist einen Zackenkranz aus zwölf Zacken 540 auf. Die Zacken 540 sind mit einer Zahnung 541 versehen, die mit dem Zahnkranz 555 des Schaltgehäuses 55 wirkverbindlich im Eingriff stehen. Die Zwischenräume 542 des Schaltringes 54 erlauben es, die Riegel 51 radial nach aussen zu bewegen aus den Schlitzen 550 des Schaltgehäuses 55. Beim Steckvorgang drückt die Ringwulst des Steckers auf den vordersten Rand 47 des Schaltkernes 40 und bewirkt eine axiale Kraft auf den Schaltkern 40, der wiederum den Schaltring 54 mitbewegt, wodurch der Schaltring um eine Zahnung verdreht wird und damit eine Zacke 540 so zu liegen kommt, dass die Riegel 51 nicht mehr radial nach aussen ausweichen können. In dieser Position kann nunmehr der Stecker nicht aus der Kupplungsdose herausgezogen werden. Im umlaufenden Reif 543 ist eine Ringnut 544 eingelassen, in der die Mitnehmernocken 43 des Schaltkernes 40 liegen. Der Schaltkranz 56 ist mit Schaltzähnen 560 versehen, die mit einem Zahnkranz 545 am Schaltring 54 zusammenwirken. Ein Axialdruk des Steckers in Ventilrichtung führt somit zu einer Schaltbewegung zwischen Schaltring 54 und Schaltkranz 56, während eine Axialbewegung des Steckers aus der Kupplungsdose hinaus eine Schaltbewegung zwischen dem Zahnkranz 555 des Schaltgehäuses und den Zähnen 541 auf den Zacken 540 des Schaltringes 54 bewirkt.

Während die Kupplungsdose 10,11 aus Metall ist, gleich wie auch der hier nicht erfindungsgemässe und nicht näher beschriebene Stecker, sind mit Ausnahme der Federn 23 und 42 nur noch der Ventilhalter 22 und der Schaltkern aus Metall gefertigt, während die komplexen Schaltmechanismusteile, nämlich der Schaltkranz 56, der Schaltring 54 und das Schaltgehäuse 55 alle aus Kunststoff spritztechnisch gefertigt sind.

## Patentansprüche

1. Steckkupplung mit einem eine Ringnut aufweisenden Stecker und einer Kupplungsdose (1) für eine Druckluftleitung, welche eine Einstecköffnung (2) für den Stecker, eine Verriegelungsvorrichtung mit Riegeln zum Eingreifen in die Ringnut (2') des Steckers und ein durch Einstecken des Steckers zu öffnendes, selbstschliessendes Ventil (20) aufweist, welches unter Federbelastung in einer Steckdosenhülse (10) axial beweglich gehalten ist, und wobei die Verriegelungsvorrichtung (50) einen axial verschiebbaren und drehbaren Schaltring (54) umfasst, der die radial beweglich gehaltenen Riegel (51) betätigt, beziehungsweise durch diese betätigt wird, wobei die Kupplungsdose (1) aus einer Kupplungsdosenhülse (10) mit Druckleitungsanschluss und einer aufschraubbaren Kupplungsdosenkappe mit der Einstecköffnung (2) besteht, **dadurch gekennzeichnet, dass** zwischen Kupplungsdosenhülse und Kupplungsdosenkappe ein Stützring (30) fest angeordnet ist, der die Kupplungsdose in einen Raum für die Verriegelungsvorrichtung und in einen Raum für die Ventil- und Dichteinheit unterteilt, und dass der Stützring (30) von einem sich darauf federbelastend abstützenden zylindrischen Schaltkern (40) axial beweglich durchsetzt ist, der formschlüssig verbunden ist mit einem Schaltgehäuse (55), in dem die Riegel (51) beweglich gehalten sind und mit dem Schaltring (54), der mit einem Schaltkranz (56) zusammenwirkt.

2. Steckkupplung nach Anspruch 1, **dadurch gekennzeichnet, dass** das Ventil (20) aus einem Ventilkörper (21) und einem Ventilhalter (22) besteht, wobei der Ventilhalter (22) im Schaltkern (40) axial gelagert ist und der Ventilkörper (21) im Schliesszustand dichtend auf das eingangsseitige Ende des Schaltkernes (40) aufliegt und im geöffneten Zustand durch den auf den Ventilhalter (22) wirkenden Stecker vom Schaltkernende weg gedrückt ist.

3. Steckkupplung nach Anspruch 2, **dadurch gekennzeichnet, dass** der Ventilhalter (22) aus einem flachen Metall gestanzt und im Ventilkörper aus Kunststoff gehalten ist.

4. Steckkupplung nach Anspruch 1, **dadurch gekennzeichnet, dass** im Schaltkern (40) formschlüssig eine Dichtmanschette (60) gelagert ist, die der Dichtung zwischen Schaltkern (40) und Stecker dient.

5. Steckkupplung nach Anspruch 1, **dadurch gekennzeichnet, dass** zwischen dem Stützring (30) und der Kupplungsdose (10,11) eine Dichtmanschette (70) angeordnet ist, die der Dichtung zwischen Schaltkern (40) und Kupplungsdose dient.

6. Steckkupplung nach Anspruch 1, **dadurch gekennzeichnet, dass** das Schaltgehäuse (55) mindestens drei radial von aussen zum Zentrum hin gerichtete Lagernuten (550) aufweist, die je einen fensterartigen Durchbruch (551) zum Innenraum des Schaltgehäuses haben, so dass in den Nuten (550) die Riegel (51) radial beweglich gelagert sind und mit ihren Nocken durch die Durchbrüche (551) in den Innenraum (15) des Schaltgehäuses ragen.

7. Steckkupplung nach Anspruch 1, **dadurch gekennzeichnet, dass** der Schaltkern (40) eine radial nach aussen vorstehende Ringwulst (41) aufweist, und dass zwischen dieser Ringwulst (41) und dem Stützring (30) eine Druckfeder (42) liegt.

8. Steckkupplung nach Anspruch 7, **dadurch gekennzeichnet, dass** der Schaltkern (40) von der Ringwulst radial nach aussen vorstehende Mitnehmernocken (43) aufweist, die einerseits in einer Ringnut (44) im Schaltring (54) eingreifen und andererseits in axialen Ausnehmungen (552) im Schaltgehäuse (55) gelagert sind.

9. Steckkupplung nach Anspruch 1, **dadurch gekennzeichnet, dass** der Schaltring (54) an beiden stirnseitigen Enden Schaltzahnkränze (541,545) aufweist und an dem zur Einstecköffnungsseite gelegenen Ende axial verlaufende Zwischenräume (542) aufweist, in denen die Riegel (51) in einer Schaltlage auszuweichen vermögen, während in einer anderen Schaltlage die verbleibenden Schaltringwandzacken (540) die Riegel (51) blockieren.

10. Steckkupplung nach Anspruch 1, **dadurch gekennzeichnet, dass** der Schaltkranz (56) sich auf den Stützring (30) axial abstützt und mit dem Schaltgehäuse (55) gegen radiale Verschiebung gesichert ist.

11. Steckkupplung nach Anspruch 1, **dadurch gekennzeichnet, dass** die Kupplungsdose mit einer Schutzhülse (12) versehen ist.

## Claims

1. A plug-in connector with a plug comprising an annular groove and with a connector socket (1), for compressed air lines, said socket comprising an insert opening (2) for the plug, a locking device with bars for engaging into the annular groove (2') of the plug, and a self-closing valve (20) which is to be opened by inserting the plug and which is held in a socket sleeve (10) in an axially movable manner under spring bias, and wherein the locking device (50) comprises an axially displaceable and rotatable switch ring (54) which actuates the bar (51) which is held in a radially movable manner, or is actuated by this, wherein the connector socket (1) consists of a connector socket sleeve (10) with a compressed line connection, and of a connector socket cap with the insert opening (2), said connector socket cap being capable of being screwed on, **characterised in that** a support ring (30) is firmly arranged between the connector socket sleeve and the connector socket cap, and divides the connector socket into a space for the locking device and into a space for the valve- and sealing unit, and that a cylindrical switch core (40) passes through the support ring (30) in an axially movable manner and is supported on this in a spring-biased manner, and is connected with a positive fit to a switch housing (55) in which the bars (51) are held in a movable manner, and to the switch ring (54) which cooperates with a switch annulus (56).

2. A plug-in connector according to claim 1, **characterised in that** the valve (20) consists of a valve body (21) and of a valve holder (22), wherein the valve holder (22) is axially mounted in the switch core (40), and the valve body (21) in the closure condition sealingly lies on the entry-side end of the switch core (40), and in the opened condition is pressed away from the switch core end by the plug acting on the valve holder (22).

3. A plug-in connector according to claim 2, **characterised in that** the valve holder (22) is punched out of a flat metal and is held in the valve body of plastic.

4. A plug-in connector according to claim 1, **characterised in that** a sealing collar (60) is mounted in the switch core (40) with a positive fit and serves for the sealing between the switch core (40) and the plug.

5. A plug-in connector according to claim 1, **characterised in that** a sealing collar (70) is arranged between the support ring (30) and the connector socket (10, 11), and serves the sealing between the switch core (40) and the connector socket.

6. A plug-in connector according to claim 1, **characterised in that** the switch housing (55) comprises at least three mounting grooves (550) which are directed radially from the outside towards the centre and which in each case have a window-like opening (551) to the inner space of the switch housing, so that the bars (51) are mounted in a radially movable manner in the grooves (550) and with their cams project through the openings (551) into the inner space (15) of the switch housing.

7. A plug-in connector according to claim 1, **characterised in that** the switch core (40) comprises a radially outwardly projecting annular bead (41), and that a compression spring (42) lies between this annular bead (41) and the support ring (30).

8. A plug-in connector according to claim 7, **characterised in that** the switch core (40) comprises catch cams (43) which project radially outwards from the annular bead and which on the one hand engage in an annular groove (44) in the switch ring (54) and on the other hand are mounted in axial recesses (552) in the switch housing (55).

9. A plug-in connector according to claim 1, **characterised in that** the switch ring (54) comprises switch toothed annuli (541, 545) at both end-face ends, and at the end situated to the insert opening side comprises axially running intermediate spaces (542) in which the bars (51) may back away in a switch position, whilst in another switch position, the remaining switch ring wall serrations (540) block the bars (51).

10. A plug-in connector according to claim 1, **characterised in that** the switch annulus (56) is supported axially on the support ring (30) and with the switch housing (55) is secured against radial displacement.

11. A plug-in connector according to claim 1, **characterised in that** the connector socket is provided with a protective sleeve (12).

## Revendications

1. Accouplement à emmanchement comprenant une partie mâle (2) munie d'une gorge annulaire (2') et une boîte d'accouplement (1) pour un conduit à air comprimé et ladite boîte d'accouplement (1) comprend une ouverture d'emboîtement (2) pour la partie mâle, un dispositif de verrouillage doté de verrous, conçus pour s'engager dans la gorge annulaire (2') de la partie mâle et une soupape (20) à ouvrir par emboîtement de la partie mâle et étant à fermeture automatique et ladite soupape est retenue avec mobilité axiale par la sollicitation d'un ressort dans une douille de boîte d'accouplement (10), et auquel cas le dispositif de verrouillage (50) comprend une bague sélectrice (54) pouvant coulisser dans le sens axial et pouvant tourner, laquelle peut actionner les verrous (51) retenus avec mobilité radiale et/ou être actionnée par ceux-ci, auquel cas la boîte d'accouplement (1) se compose d'une douille de boîte d'accouplement (10) avec conduite d'alimentation à pression et chapeau de boîte d'accouplement à visser avec l'ouverture d'emboîtement (2), **caractérisé en ce qu'**une bague d'appui (30) est fixement agencée entre la douille de boîte d'accouplement et le chapeau de boîte d'accouplement et cette bague d'appui subdivise la boîte d'accouplement en un espace pour le dispositif de verrouillage et en un espace pour l'unité soupape et l'unité d'étanchéité et **en ce que** la bague d'appui (30) est traversée avec faculté de déplacement axial par un noyau sélecteur (40) cylindrique s'appuyant là-dessus sous la charge d'un ressort, le noyau sélecteur (40) étant relié par liaison de forme avec une boîte de commutation (55) - dans laquelle les verrous (51) sont maintenus mobile - et avec la bague sélectrice (54), laquelle agit en concomitance avec la couronne sélectrice (56).

2. Accouplement à emmanchement selon la revendication 1, **caractérisé en ce que** la soupape (20) se compose d'un corps de soupape (21) et d'un support de soupape (22), auquel cas le support de soupape (22) est logé de façon axiale dans le noyau sélecteur (40) et le corps de soupape (21), à l'état fermé, s'appuie de façon étanche sur l'extrémité du côté de l'entré du noyau sélecteur (40) et, à l'état ouvert, il est repoussé de l'extrémité du noyau sélecteur par la partie mâle agissant sur le support de soupape (22).

3. Accouplement à emmanchement selon la revendication 2, **caractérisé en ce que** le support de soupape (22) est estampé en un métal plat et est maintenu dans le corps de soupape par une matière synthétique.

4. Accouplement à emmanchement selon la revendication 1, **caractérisé en ce qu'**une manchette d'étanchéité (60) est logée par liaison de forme dans le noyau sélecteur (40), cette manchette d'étanchéité (60) servant de garniture d'étanchéité entre le noyau sélecteur (40) et la partie mâle.

5. Accouplement à emmanchement selon la revendication 1, **caractérisé en ce qu'**une manchette d'étanchéité (70) est agencée entre la bague d'appui (30) et la boîte d'accouplement (10, 11), cette manchette d'étanchéité (70) servant de garniture d'étanchéité entre le noyau sélecteur (40) et la boîte d'accouplement.

6. Accouplement à emmanchement selon la revendication 1, **caractérisé en ce que** la boîte de commutation (55) présente au moins trois gorges de support radiales (550), dirigées de l'extérieur vers le centre, chacune desquelles possède un passage genre fenêtre vers l'intérieur de la boîte de commutation (55), de sorte que les verrous (51) sont logés avec mobilité axiale dans les rainures et dépassent avec leur cames à travers les passages (551) à l'intérieur de la boîte de commutation.

7. Accouplement à emmanchement selon la revendication 1, **caractérisé en ce que** le noyau sélecteur (40) présente un bourrelet annulaire (41) saillant de façon radial vers l'extérieur et qu'un ressort de pression (42) est situé entre ce bourrelet annulaire (41) et la bague d'appui (30).

8. Accouplement à emmanchement selon la revendication 7, **caractérisé en ce que** le noyau sélecteur (40) présente des cames d'entraînement (43) saillant de façon radiale vers l'extérieur à partir du bourrelet annulaire, lesdites cames d'entraînement (43), d'une part, s'engagent dans une gorge annulaire (44) dans la bague sélectrice (54) et, d'autre part, elles sont logées dans des creux axiaux (552) dans la boîte de commutation (55).

9. Accouplement à emmanchement selon la revendication 1, **caractérisé en ce que** la bague sélectrice (54) comprend des couronnes dentées sélectrices - aux deux extrémités du côté frontal - et des espacements (542) s'écoulant radialement à l'extrémité située vers le côté de l'orifice d'emboîtement, et dans lesdits espacements (542) les verrous (51) sont capables de s'écarter, dans une position de contact, tandis que, dans une autre position de contact, les pointes de paroi de bague sélectrice (540) restantes bloquent les verrous(51).

10. Accouplement à emmanchement selon la revendication 1, **caractérisé en ce que** la couronne sélectrice (56) s'appuie de façon axiale sur la bague sélectrice (30) et est à l'abri, avec la boîte de commutation (55), du déplacement radial.

11. Accouplement à emmanchement selon la revendication 1, **caractérisé en ce que** la boîte d'accouplement (1) est pourvue d'une gaine de protection (12).
